# EUROPÄISCHE PATENTSCHRIFT

(11) **EP 0 764 901 B1**
(45) Veröffentlichungstag und Bekanntmachung des Hinweises auf die Patenterteilung: **14.02.2001**
(21) Anmeldenummer: 95114821.2
(22) Anmeldetag: 20.09.1995
(51) Int. Cl.: G06F 9/46

(54) **Interruptbehandlungssystem eines Betriebssystems**
Interrupt handling in an operating system
Traitement d'interruption dans un système d'exploitation

(43) Veröffentlichungstag der Anmeldung: 26.03.1997
(73) Patentinhaber: SIEMENS AKTIENGESELLSCHAFT, 80333 München (DE)
(72) Erfinder: Schauer, Günther, Dipl.-Ing., D-85716 Lohhof (DE); Weiss, Martin, Dipl.-Ing. (FH), D-81476 München (DE); Weiss, Alfons, Ing., A-2286 Fuchsenbigl (AT); Syrch, Wolfgang, Ing., A-2333 Leopoldsdorf (AT)

(56) Entgegenhaltungen:
- IBM TECHNICAL DISCLOSURE BULLETIN, Bd. 33, Nr. 9, Februar 1991 NEW YORK, US, Seiten 446-447, XP 000109566 ANONYMOUS 'Generic Unix Off-Level Interrupt Handling Invocation Algorithm.'

## Beschreibung

Üblicherweise werden in Rechnersystemen, insbesondere Echtzeitsystemen, zeitkritische Bearbeitungsanteile durch Interruptserviceroutinen erledigt, die durch eine entsprechende Interruptanforderung von einer Interruptquelle angestoßen werden. Die Interruptserviceroutinen können jederzeit (Voraussetzung: Interrupt ist nicht gesperrt) laufende Prozesse bzw. Tasks unterbrechen. Aufgrund dieser Handhabung kann man ein Echtzeitsystem bezüglich der Priorität in ein Zwei-Schichten-Modell aufteilen:

| | |
|---|---|
| Schicht hoher Priorität | Interruptserviceroutinen |
| Schicht niedriger Priorität | Prozesse bzw. Tasks |

Innerhalb jeder dieser beiden Schichten gibt es wiederum eine eigene Prioritätseinteilung. Prioritäten zwischen den Interruptserviceroutinen sind durch die Hardware oder die Einstellung der Interruptcontroller vorgegeben, während Prioritäten zwischen den Prozessen innerhalb der Prozesse selbst, d.h. durch den Anwendungsprogrammierer festlegbar (konfigurierbar) sind. Die Interruptserviceroutinen (ISR) können mit einem Prozess über Betriebssystemfunktionen kommunizieren, die aus der jeweiligen Interruptserviceroutine aufgerufen werden.

Als Interruptbeispiel werde ein Puffer betrachtet, der in gefülltem Zustand einen Interrupt auslöst. Aufgrund der Interruptauslösung (Interruptanforderung) wird vom Betriebssystem die zugehörige Interruptserviceroutine ermittelt und angestoßen. Die genannte Interruptserviceroutine leert dann den Puffer und sendet den Inhalt zur Auswertung oder Weiterverarbeitung mit Hilfe einer Betriebssystemfunktion an einen Prozess. Handelt es sich nun bei dem betrachteten Puffer um einen Sende- oder Empfangspuffer bei Datenübertragungsvorgängen in der Telekommunikationstechnik, so muß der zugehörige Interrupt den in der Länge stark begrenzten Puffer entsprechend schnell bedienen (d.h. nur kurze Sperrzeit des Puffers), um Datenverluste und dadurch eine Übertragungswiederholung (durch das verwendete Protokoll, z.B. HDLC) zu vermeiden. Je größer die Anzahl der Interruptquellen ist, um so reaktionsschneller müssen somit die zugehörigen Interruptserviceroutinen sein. Aufgrund der vielfach von Interruptserviceroutinen zu verwendenden Betriebssystemfunktionen, die erfahrungsgemäß die meiste Zeit einer Interruptserviceroutine in Anspruch nehmen, kann die Zeitdauer einer Interruptserviceroutine jedoch nicht beliebig verkürzt werden.

Der Erfindung liegt die Aufgabe zugrunde, ein Interruptbehandlungssystem anzugeben, das es ermöglicht, zeitkritische Aufgaben noch schneller als bisher durchzuführen.

Diese Aufgabe wird durch ein Interruptbehandlungssystem mit den Merkmalen des Anspruchs 1 gelöst.

Im folgenden wird ein Ausführungsbeispiel der Erfindung anhand der Zeichnung näher erläutert.

Durch das erfindungsgemäße Interruptbehandlungssystem wird eine Zweiteilung der Interruptbehandlung in Interruptserviceroutinen und in Interruptprozeduren erreicht. Dadurch ergibt sich bezüglich der Prioritäten in einem Echtzeitsystem folgendes Drei-Schichten-Modell:

| | |
|---|---|
| Schicht hoher Priorität | Interruptserviceroutinen |
| Schicht mittlerer Priorität | Interruptprozeduren |
| Schicht niedriger Priorität | Prozesse bzw. Tasks |

Innerhalb jeder einzelnen Schicht (auch in der neu hinzugekommenen Schicht der Interruptprozeduren) gibt es nach wie vor eine eigene Prioritäteneinteilung. Im Unterschied zur bisherigen Lösung müssen aber nunmehr in den Interruptserviceroutinen keine zeitraubenden Betriebssystemfunktionen (wie beispielsweise "Poolelement-Holen zum Versenden einer Meldung an einen Prozess") mehr verwendet werden. Mit anderen Worten muß eine Interruptserviceroutine nun nur noch insoweit auf den Interrupt reagieren, daß dieser wieder freigegeben werden kann und die Interruptroutine muß je nach Interruptart dem Betriebssystem die Adresse einer auszuführenden Interruptprozedur mitteilen. Die Interruptprozeduren übernehmen dann später den zeitintensiven Bearbeitungsteil der Interruptbehandlung (beispielsweise die Ausführung einer Betriebssystemfunktion) und können jederzeit durch einen erneuten Interrupt unterbrochen werden. Ein Aufruf der Interruptprozeduren bzw. eine Fortsetzung der Interruptprozeduren erfolgt dann vom Betriebssystem, wenn keine Interruptserviceroutinen mehr zur Bearbeitung anstehen. Schließlich kommen nach Abarbeitung aller Interruptprozeduren die Prozesse mit der Verarbeitung an die Reihe.

Um das erfindungsgemäße Interruptsystem für die Anwendung einfach und sicher zu machen, enthalten auch die Interruptserviceroutinen Betriebssystemfunktionen, jedoch nur solche, die ausschließlich für den Zweck der erfindungsgemäßen zweiteiligen Interruptbehandlung vorgesehen sind. Genauer gesagt handelt es sich bei diesen Betriebssystemfunktionen um eine Funktion zur Übergabe von Interruptprozeduren mit Angabe einer Priorität (gültig für die Schicht der Interruptprozeduren) aus einer Interruptserviceroutine an das Betriebssystem und um je eine Funktion als Vor- und Nachspann, die zwingend am Beginn bzw. am Ende einer Interruptserviceroutine aufgerufen werden muß. Durch die letzteren Funktionen werden Aufgaben vom Betriebssystem erledigt, die zentral für alle Interruptserviceroutinen durchzuführen sind (z.B. Verwendung eines gemeinsamen Stacks, Starten der Abarbeitung der Interruptprozeduren, Steuerung des jeweiligen Interruptcontrollers, usw.).

Im folgenden wird nochmals in etwas genauerer Weise die erfindungsgemäße Interruptbehandlung erläutert.

Die erfindungsgemäße Interruptbehandlung erfolgt in zwei Teilen. Der erste Teil ist die eigentliche Interruptserviceroutine, die nach Auftreten eines entsprechenden Interrupts über die Interruptvektor-Tabelle ermittelt wird. Die Interruptserviceroutine bearbeitet den zeitkritischen Teil der Interrupt-Behandlung und darf nur die exklusiv für die Interruptserviceroutinen vorgesehenen Betriebssystemfunktionen benutzen.

Der zweite Teil der Interruptbehandlung, nämlich die Interruptprozedur läuft unter der Kontrolle des Betriebssystems, bearbeitet die zeitunkritischeren Anteile des Interrupts und kann uneingeschränkt Betriebssystemfunktionen verwenden. Interruptprozeduren werden vom Betriebssystem aus aufgerufen, sobald keine Interruptserviceroutine mehr zur Bearbeitung ansteht.

Das Betriebssystem wird über eine von einer Interruptserviceroutine benutzte Betriebssystemfunktion informiert, wenn ein zweiter Teil der Interruptbehandlung notwendig ist. Die Adresse der Interruptprozedur, die den zweiten Bearbeitsteil beinhaltet, wird dabei als Parameter übergeben, ebenso die Priorität dieser Interruptprozedur. Das Betriebssystem kettet daraufhin diesen Auftrag entsprechend der mitgelieferten Priorität in eine prioritätsgesteuerte Warteschlange ein.

Die Anzahl der vom Betriebssystem aufzurufenden Interruptprozeduren ist beliebig, d.h. abhängig von dem entsprechenden Interrupt, und nur durch die Anzahl der möglichen Einträge in die genannte prioritätsgesteuerte Warteschlange begrenzt.

Nach Beendigung der Behandlung der letzten Interruptserviceroutine wird vom Betriebssystem das Ausketten aus der prioritätsgesteuerten Warteschlange und damit die sequentielle Abarbeitung der Interruptprozeduren angestoßen. Erst wenn die genannte prioritätsgesteuerte Warteschlange leer ist, wird der Scheduler aufgerufen und zu demjenigen Prozess verzweigt, der die höchste Priorität hat und im Zustand "ready to run" ist.

Wie bereits erwähnt, gibt es aufgrund der erfindungsgemäßen Zweiteilung der Interruptbehandlung drei verschiedene Prioritätsschichten. Die höchste Prioritätsschicht wird von den Interruptserviceroutinen gebildet, die jederzeit Interruptprozeduren oder Prozesse unterbrechen können. Je nach Priorität einer Interruptquelle im Interruptcontroller und dessen Zustand der "Interrupt in Service"-Bits können die Interruptserviceroutinen beliebig verschachtelt sein. Die Interruptprozeduren werden erst im Anschluß an die Interruptserviceroutinen abhängig von ihrer Priorität sequentiell hintereinander abgearbeitet. Für die Koordinierung des Ablauf ist eine zentrale Steuerung durch zwei Betriebssystemfunktionen vorgesehen, die von jeder Interruptserviceroutine aufgerufen werden müssen.

Erst wenn die Interruptbehandlung (Interruptserviceroutinen und Interruptprozeduren) abgeschlossen ist, wird vom Scheduler dem höchstpriorisierten lauffähigen Prozess der Prozessor zugeteilt. Die Prioritäten innerhalb der Prozesse werden durch die Betriebssystem-Generierung festgelegt, können aber dynamisch geändert werden.

Durch die genannte erfindungsgemäße Interrupt-Behandlung erreicht man eine schnellstmögliche Reaktion auf eingetretene Ereignisse. Die zeitunkritische und meist zeitaufwendigere Bearbeitung (z.B. Poolelement-Holen, usw...) erfolgt in einem nachfolgenden Teil, der aber von jedem beliebigen Interrupt unterbrechbar ist. Würde dieser nachfolgende Teil innerhalb einer Interruptserviceroutine bearbeitet werden, müßte ein Interrupt mit niedrigerer Priorität während dieser Zeit warten, was die Gefahr des Datenverlusts birgt, wenn z.B. ein Empfangspuffer nicht rechtzeitig geleert wird. Die erfindungsgemäße Interruptbehandlung ist insbesondere für das Abfangen von Interrupt-Bursts geeignet.

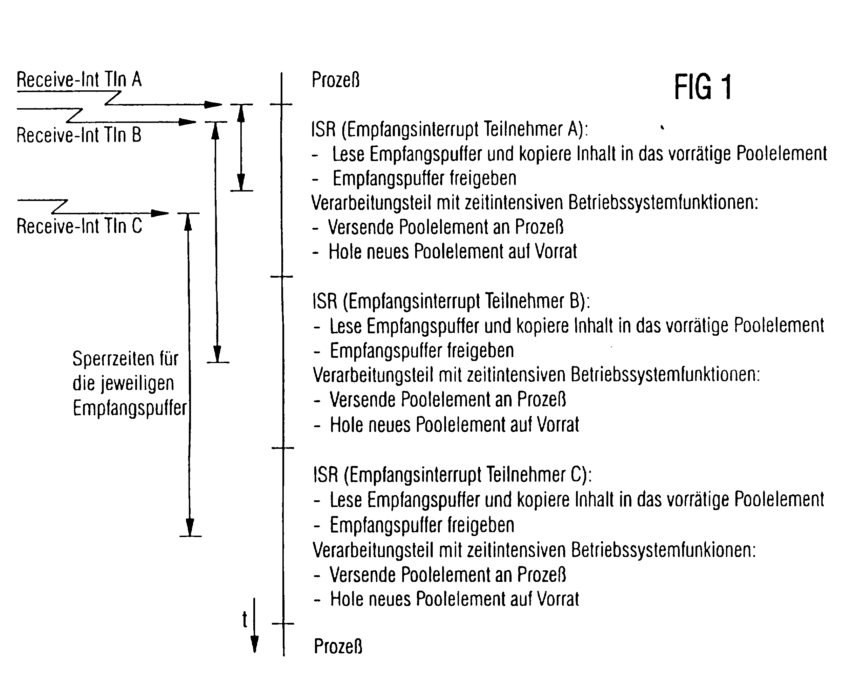

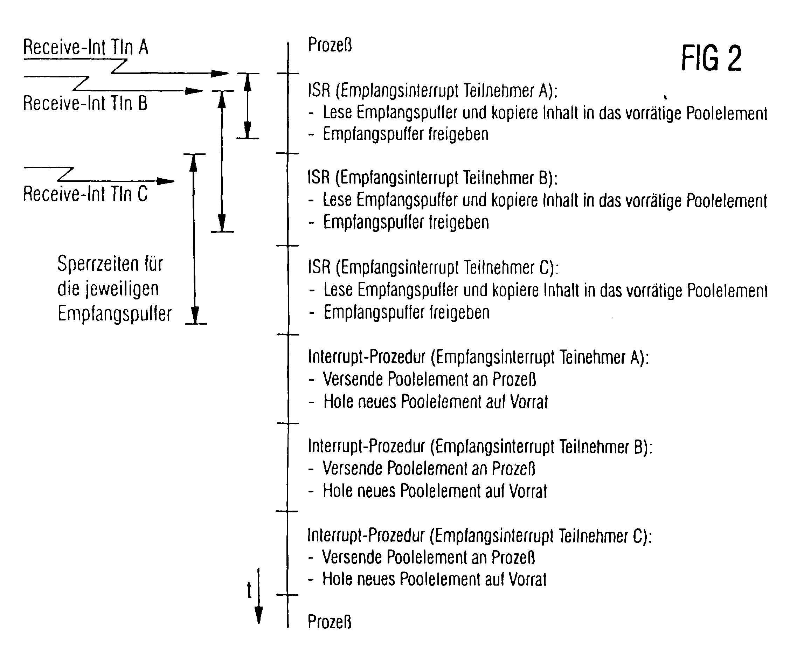

Die Unterschiede zwischen der bisherigen und der erfindungsgemäßen Interruptbehandlung werden im folgenden anhand der FIG 1 (bisherige Interruptbehandlung) und FIG 2 (erfindungsgemäße Interruptbehandlung) veranschaulicht. Die FIG 1 und 2 veranschaulichen dabei ein Beispiel aus der Telekommunikationstechnik, bei dem eine ISDN-Teilnehmeranschlußbaugruppe eines Vermittlungssystems 24 ISDN-Teilnehmer bedient. Die hauptsächliche Arbeitsbelastung entsteht hierbei durch die Verarbeitung der Signalisierungs- und Paketdaten (s- und p-Daten des D-Kanals). In dem Figurenbeispiel wird angenommen, daß die Teilnehmeranschlußbaugruppe über entsprechende Empfangspuffer für die Teilnehmer A, B und C quasi gleichzeitig entsprechende Frames empfängt. Aufgrund der Statusänderung in den Empfangspuffern der genannten Teilnehmer werden entsprechende Interruptsignale (Receive-Interrupt) erzeugt. Nachdem vom Prozessor der Teilnehmeranschlußbaugruppe ermittelt worden ist, daß es sich um Interruptsignale der Empfangspuffer handelt, werden entsprechende Interruptserviceroutinen aufgerufen. Die sich daran anschließenden Abläufe können den FIG 1 und 2 selbst entnommen werden.

## Patentansprüche

1. Interruptbehandlungssystem eines Betriebssystems, mit
a) Interruptserviceroutinen (ISR), die den zeitkritischen Teil einer Interruptbehandlung durchführen und nur die exklusiv für die Interruptserviceroutinen vorgesehenen Betriebssystemfunktionen benutzen dürfen, und
b) Interruptprozeduren, die den zeitunkritischen Teil einer Interruptbehandlung durchführen und uneingeschränkt Betriebssystemfunktionen verwenden können, wobei eine Interruptserviceroutine dem Betriebssystem eine Mitteilung über eine im Rahmen einer Interruptbehandlung noch aufzurufende Interruptprozedur sendet, und das Betriebssystem die auf diese Weise mitgeteilten Interruptprozeduren erst dann aufruft, wenn keine Interruptserviceroutinen mehr zur Bearbeitung anstehen.

2. Interruptbehandlungssystem nach Anspruch 1,
**dadurch gekennzeichnet,**
daß das Betriebssystem die Aufrufreihenfolge unter den mitgeteilten Interruptprozeduren nach Prioritätsinformationen steuert, die in den genannten Mitteilungen der Interruptserviceroutinen enthalten sind.

3. Interruptbehandlungssystem Anspruch 1 oder 2,
**gekennzeichnet durch**
zwei Betriebssystem-Funktionen, die den folgerichtigen Ablauf bei verschachtelten Interruptserviceroutinen koordinieren und die von einer Interruptserviceroutine zu Beginn und Ende aufgerufen werden.

## Claims

1. Interrupt handling system of an operating system, having
a) interrupt service routines (ISR) which carry out the time-critical part of an interrupt action, and may use only those operating system functions which are intended exclusively for the interrupt service routines, and
b) interrupt procedures, which carry out that part of an interrupt action which is not time critical and can use operating system functions without any limitation, with an interrupt service routine sending a message to the operating system about an interrupt procedure which is still to be called up in the course of an interrupt action, and the operating system calling the interrupt procedures reported in this way only when there are no more interrupt service routines for processing.

2. Interrupt handling system according to Claim 1,
characterized
in that the operating system controls the sequence in which the reported interrupt procedures are called on the basis of priority information which is contained in the said messages from the interrupt service routine.

3. Interrupt handling system according to Claim 1 or 2,
characterized by
two operating system functions which co-ordinate the correct sequence for interleaved interrupt service routines, and which are called up by an interrupt service routine at the start and end.

## Revendications

1. Système de traitement d'interruption d'un système d'exploitation, comportant
a) des routines (ISR) de service d'interruption qui effectuent la partie urgente d'un traitement d'interruption et qui ne peuvent utiliser que les fonctions du système d'exploitation prévues exclusivement pour les routines de service d'interruption, et
b) des procédures d'interruption qui exécutent la partie non critique d'un traitement d'interruption et qui peuvent utiliser sans restriction des fonctions du système d'exploitation, une routine de service d'interruption envoyant au système d'exploitation une communication concernant une procédure d'interruption encore à appeler dans le cadre d'un traitement d'interruption, et le système d'exploitation n'appelant la procédure d'interruption communiquée de cette manière que quand il n'est plus présent de routine de service d'interruption pour le traitement.

2. Système de traitement d'interruption suivant la revendication 1, caractérisé en ce que le système d'exploitation commande la succession d'appels parmi les procédures d'interruption communiquées suivant des informations sur la priorité qui sont contenues dans lesdites communications des routines de service d'interruption.

3. Système de traitement d'interruption suivant la revendication 1 ou 2, caractérisé par deux fonctions du système d'exploitation qui coordonnent le déroulement en succession correcte pour des routines de service d'interruption imbriquées et qui sont appelées par une routine de service d'interruption au début et à la fin.
